Europäisches Patentamt

European Patent Office

Office européen des brevets

(19)

(11) Numéro de publication: **0 142 451**
**A2**

(12) **DEMANDE DE BREVET EUROPEEN**

(21) Numéro de dépôt: **84402350.7**

(22) Date de dépôt: **16.11.84**

(51) Int. Cl.⁴: **A 22 B 7/00**

(30) Priorité: **16.11.83 FR 8318447**

(43) Date de publication de la demande:
**22.05.85 Bulletin 85/21**

(84) Etats contractants désignés:
**BE CH DE GB IT LI NL SE**

(71) Demandeur: **Aubert, Georges**
**Mas d'Armor La Roumiguière**
**F-13360 Roquevaire(FR)**

(72) Inventeur: **Aubert, Georges**
**Mas d'Armor La Roumiguière**
**F-13360 Roquevaire(FR)**

(74) Mandataire: **Letheule, Jacqueline**
**5 Rue José-Maria de Hérédia**
**F-75007 Paris(FR)**

(54) **Dispositif mécanique et automatique d'accrochage des animaux de boucherie après abattage en abattoirs.**

(57) L'invention concerne l'automatisation d'une partie de la manutention des animaux dans les abattoirs.

L'ensemble est constitué de: une goulottte en pente sur lequel arrive l'animal saigné et nettoyé, deux buttées escamotables pour positionner l'animal dans la goulotte, un balancier doublement articulé pour relevage des pattes arrières, un couteau double pour inciser la peau des pieds deux crochets doublement articulés pour soulever les tendons des pattes arrières et les accrocher sur un crochet double existant qui repart sur la chaîne générale.

Toutes ces manoeuvres sont commandées par un ordinateur.

L'invention est applicable en particulier à l'abattage des porcs.

EP 0 142 451 A2

Croydon Printing Company Ltd.

1

# DISPOSITIF MECANIQUE ET AUTOMATIQUE D'ACCROCHAGE DES ANIMAUX DE BOUCHERIE APRES ABATTAGE EN ABATTOIRS .

La présente invention concerne des dispositifs permettant l'accrochage automatique des animaux aussitôt après l'abattage.

Actuellement une partie des opérations est faite manuellement ce qui nécessite du personnel supplémentaire, des risques d'accidents, un travail monotone et une augmentation du prix de revient.

Les animaux, après avoir été saignés, sont repris par des ouvriers qui refendent la peau de la face arrière des pattes postérieures, au droit des pieds pour dégager les tendons, dans lesquels on introduit un crochet double, qui repart sur la chaîne en emportant l'animal pendu par les pieds.

La présente invention supprime tous les inconvénients, dont les principaux sont signalés ci-dessus, par automatisation de ces opérations.

Les dessins annexés, donnés à titre d'exemple non limitatif, représentent une des formes de réalisation de l'invention, appliquée à l'abattage des porcs.

- La figure 1 représente longitudinalement l'animal dans la goulotte de début d'automatisation.

- La figure 2 est une vue arrière.

- La figure 3 est un détail du dispositif de relevage des pattes arrières.

- La figure 4 est un détail du buttoir de positionnement de l'animal.

- La figure 5 représente le premier mouvement du dispositif de relevage des pattes postérieures.

- La figure 6 représente le mouvement suivant, et le couteau double d'incision de la peau du pied.

- La figure 7 représente le relevage maximal des pattes

- La figure 8 est une vue des 2 crochets oscillants introduits dans les tendons.

- La figure 9 est la même vue, les crochets oscillants ayant rapproché les pattes et accroché les tendons sur un crochet double, après que le dispositif de relevage se soit retiré.

0142451

- 2 -

- La figure 10 est une vue longitudinale de l'animal de l'animal suspendu par le tendon sur le crochet double.

- La figure 11 représente le rail mobile en position relevé et le crochet double prêt à être entraîné sur la chaîne avec l'animal suspendu.

- La description de l'ensemble de ces dispositifs, selon l'invention est la suivante:

Le rail fixe 1, la partie 2 mobile suivant flèche 10 pour raccordement sur rail fixe de départ 4, la chaîne 5 avec ses taquets d'entraînement 6 qui circule suivant flèche 7, les crochets doubles 8, en stock sur le rail 1, et du dispositif 9 de libération d'un seul de ces crochets, par commande à distance, pour venir sur le rail 2 en pente, s'immobiliser sur le buttoir 3.

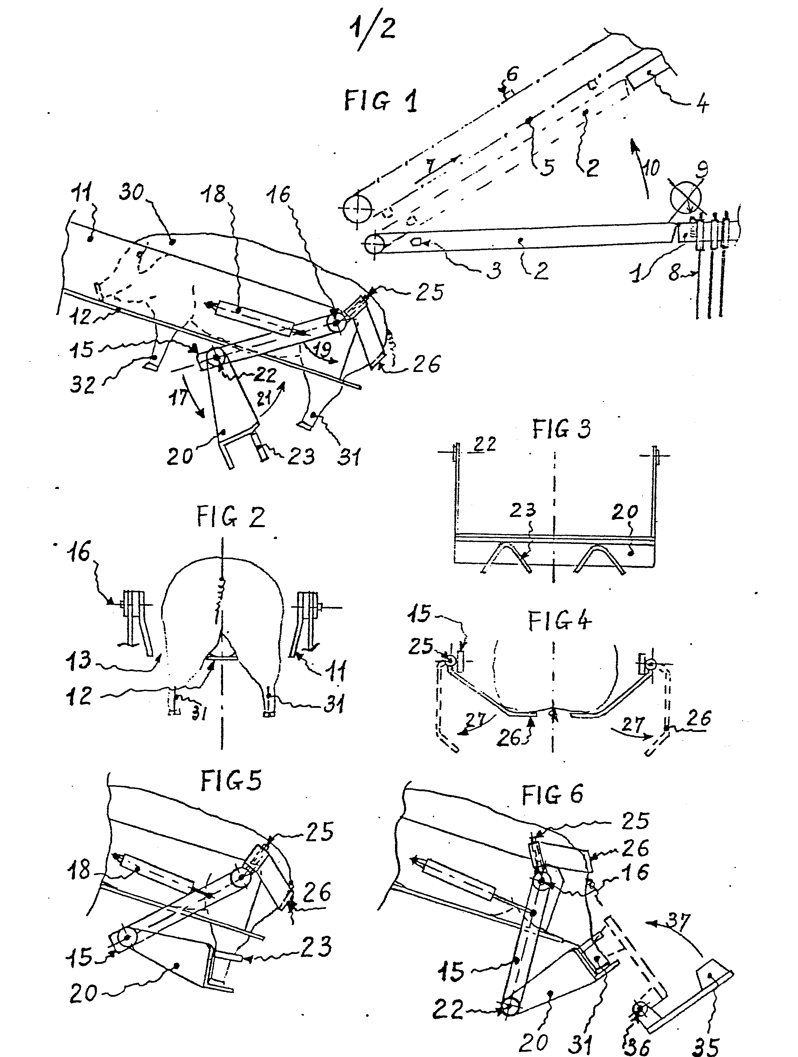

- Une goulotte en pente suivant figures 1 et 2 avec des côtés 11, un fond 12 et des ouvertures lõgitudinales 13.

- Un balancier doublement articulé, suivant figures 1 - 3, comprenant, le balancier 20, avec guides 23, articulé sur axes 22 suivant flèches 21, sur deux bras 15 qui oscillent sur axes fixes 16 suivant flèche 19.

- Deux buttoirs 26 suivant figure 1 et 4 oscillants suivant flèche 27 sur axes 25 fixés sur les bras 15 du balancier 20.

- Un couteau double 35 articulé sur axe fixe 36 suivant flèche 37.

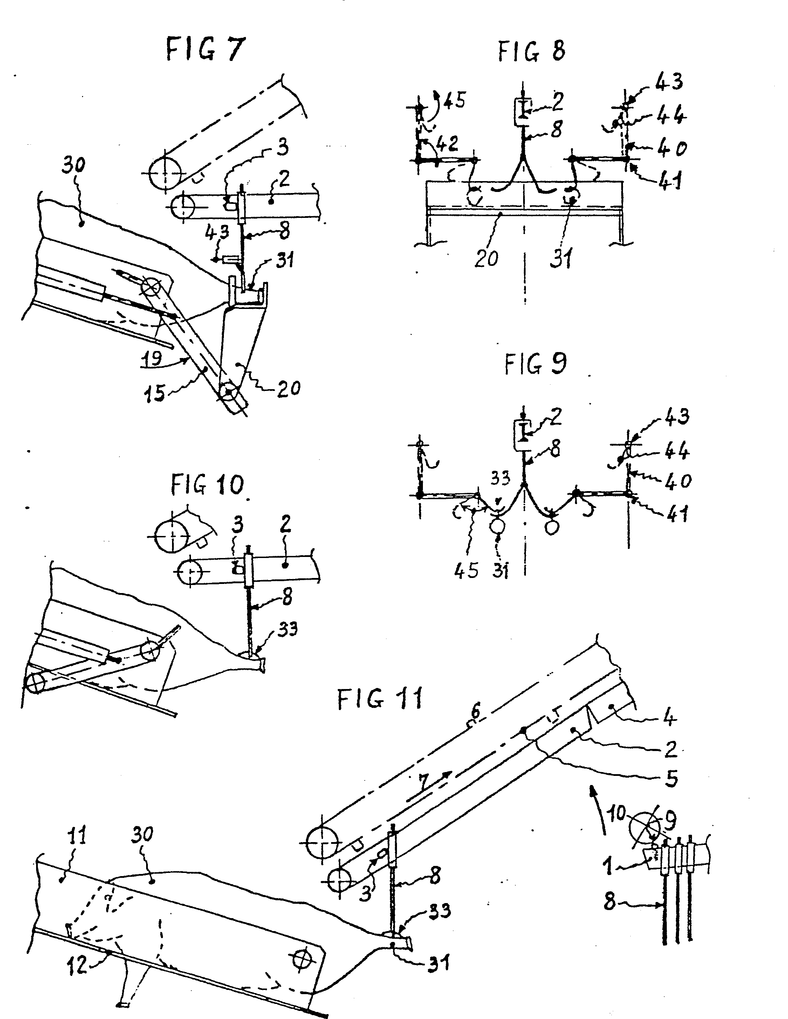

- Deux crochets doublement articulés, selon figure 8 et 9, comprenant chacun: l'· axe· fixe. 41 sur lequel oscille le bras 40.

Le fonctionnement est le suivant:

Le porc 30 est déposé au départ de la goulotte 11 - 12 en pente, voir figures 1 et 2, les pattes 31 et 32 passent dans les ouvertures 13 et l'animal glisse sur le ventre sur le fond 12, jusqu'en butée sur les buttoirs de positionnement 26 selon figure 4.

Selon figure 1, le balancier 20 se déplace suivant flèche 21 au moyen d'un cylindre non représenté, et les bras 15 tournent suivant flèche 19 au moyen du cylindre 18. Les pattes 31 de l'animal sont positionnées par les guides 23 et la semelle du balancier 20, selon figure 3. La figure 5 montre cette première phase du relevage des pattes qui se poursuit par la rotation des bras 15 jusqu'à la position suivant figure 6.

Selon figure 6, le couteau double 35 actionné par un cylindre non représenté, vient en position suivant tracé en pointillé pour inciser la peau des pieds 31, puis revient au point de départ.

Les buttoirs 26 de positionnement du porc s'ouvrent alors, suivant tracé en pointillé de la figure 4. Un crochet double 8, voir sur figure 1, est libéré par commande à distance du dispositif 9 et glisse sur le rail 2 jusqu'à la butée 3. Les bras 15 avec leur balancier 20 poursuivent leur course 19 jusqu'en position maximale selon figure 7 et 8.

Les deux crochets 44, voir figure 8, les bras 40 viennent en position suivant tracé en traits forts, au moyen d'un cylindre non représenté. De même, les crochets 44 tournent, au moyen d'un cylindre non représenté, dans la position en traits forts, en accrochant les tendons des pieds 31 positionnés par le balancier 20.

L'ensemble balancier 20 - 15 se retire en position de départ, comme en figure 1 et les pieds du porcs 30 sont pendus par leur tendon aux crochets 44.

Les deux crochets 44 poursuivent leur course suivant figure 9, rapprochent les pattes 31 qui s'accrochent par les tendons sur le crochet double 8.

Les crochets 44 reviennent à leur position de repos, ainsi que les bras 40, selon tracé en pointillé de la figure 9.

Le porc est pendu par les tendons 33, suivant figure 10, au crochet double 8.

Suivant figure 11, le rail 2 a été soulevé, suivant flèche 10 dans le prolongement du rail de départ 4 et la chaîne 5 mise en route suivant flèche 7 entraîne par ses taquets 6 le crochet double 8 et le porc 30 pendu par les tendons 33 de ses pieds postérieures 31.

Le programmateur pour assurer la suite des différentes manoeuvres est d'un type classique, électronique, électrique, pneumatique ou autres.

Les divers mouvements obtenus par des cylindres, suivant description, selon la méthode la plus simple, peuvent être aussi réalisés par mouvements mécaniques rotatifs et dans tous les cas les sources d'énergie peuvent être pneumatique, hydraulique ou autres.

Les formes, les dimensions et dispositions des différents éléments pourront varier dans la limite des équivalents, comme d'ailleurs les matières utilisées pour leur fabrication, ainsi que les appareils pour produire les mouvements sans changer pour cela la conception génrale de l'invention qui vient d'être décrite.

REVENDICATIONS

------------------------

1. Procédé pour l'accrochage des animaux de boucherie, en particulier des porcs, après abattage, caractérisé en ce qu'il comprend les étapes consistant à :

(a) amener un animal (30) en une position prédéterminée par descente le long d'une goulotte d'arrivée inclinée (11,12);

(b) faire pivoter les pattes arrière (31) de l'animal en une première position et les supporter fermement dans cette position, les faces postérieures desdites pattes étant dégagées;

(c) entailler lesdites faces postérieures des pattes arrière pour en dégager les tendons;

(d) faire pivoter les pattes arrière (31) de l'animal en une seconde position;

(e) amener les tendons dégagés sur des crochets (8) prévus sur des moyens de transfert coulissants (2); et

(f) entraîner les moyens de transfert coulissants (2) pour évacuer l'animal ainsi accroché par les pattes arrière.

2. Dispositif d'accrochage des animaux de boucherie, pour la mise en œuvre du procédé selon la revendication 1, caractérisé en ce qu'il comprend, en combinaison :

une goulotte inclinée (11,12) d'arrivée individuelle des animaux (30);

à l'extrémité inférieure de la goulotte, des moyens articulés (15,20,23) pour faire pivoter les pattes arrière (31) de l'animal (30) successivement vers lesdites première et seconde positions et pour soutenir lesdites pattes dans ces positions;

des moyens à couteaux pivotants (35) pour ladite étape d'entaillage;

des moyens à premiers crochets de transfert articulés (40,44);

des moyens à seconds crochets (8) prévus sur un organe de transfert coulissant (2);

un rail de guidage (4) pour l'organe de transfert coulissant (2) portant les moyens à seconds crochets;

lesdits premiers moyens à crochets (40,44) étant agencés pour saisir les tendons dégagés par l'étape d'entaillage et pour amener ceux-ci sur lesdits seconds moyens à crochets; et

2

0142451

des moyens d'entraînement et de commande (5, 6, 9, 18) étant en outre prévus pour mettre en mouvement les divers moyens mobiles et pour synchroniser lesdits mouvements selon un cycle de traitement prédéterminé.

3. Dispositif selon la revendication 2, caractérisé en ce que la goulotte inclinée (11, 12) présente dans sa surface de fond (12) deux ouvertures longitudinales (13) pour le passage des pattes arrière (31) de l'animal (30).

4. Dispositif selon l'une quelconque des revendications 2 et 3, caractérisé en ce que les moyens articulés de pivotement et de soutien des pattes arrière (31) comprennent deux bras de liaison (15) montés pivotants par une de leurs extrémités sur les parois latérales (11) de la goulotte, respectivement, un balancier (20) monté pivotant sur les autres extrémités des bras (15), deux guides (23) de maintien desdites pattes arrière fixés sur le balancier, et des moyens d'entraînement (18) pour assurer le pivotement des bras (15) par rapport à la goulotte et le pivotement du balancier (20) par rapport aux bras.

5. Dispositif selon l'une quelconque des revendications 2 à 4, caractérisé en ce que les moyens à couteaux comprennent deux couteaux latéralement espacés (35) montés pivotants sur un axe fixe (36) et des moyens d'entraînement pour amener les couteaux à entailler ladite face postérieure des pattes arrière (31) lorsque celles-ci occupent ladite seconde position.

6. Dispositif selon l'une quelconque des revendications 2 à 5, caractérisé en ce que les moyens à premiers crochets (40, 44) comprennent deux bras articulés (40) aux extrémités libres desquels sont montés deux crochets (44) également articulés, des moyens d'entraînement étant en outre prévus pour déplacer lesdits bras (40) et crochets (44) articulés de telle sorte que les crochets (44) accrochent les tendons desdites pattes arrière (31) puis déplacent ces dernières de telle sorte que lesdits tendons soient amenés sur les seconds moyens à crochets (8).

7. Dispositif selon l'une quelconque des revendications 2 à 6, caractérisé en ce que les moyens à seconds crochets comprennent un crochet double (8).

8. Dispositif selon l'une quelconque des revendications 2 à 7, caractérisé en ce que le rail de guidage (4) est monté pivotant dans la région de l'extrémité inférieure de la goulotte (11, 12) et est agencé pour prendre sélectivement deux positions toutes deux inclinées vers le haut à partir de ladite goulotte, des moyens d'entraînement à chaîne (5) et taquets (6) desdits organes coulissants (2) étant prévus le long de la position de plus grande inclinaison du rail (4), et des moyens (9) étant en outre prévus pour amener sélectivement un organe coulissant (2) à glisser le long du rail (4) vers la région de l'extrémité inférieure de la goulotte lorsque ledit rail occupe la position de plus faible inclinaison.

10. Dispositif selon l'une quelconque des revendications 2 à 9, caractérisé en ce que les moyens d'entraînement comprennent des cylindres hydrauliques ou pneumatiques.

FIG 1

FIG 2

FIG 3

FIG 4

FIG 5

FIG 6

0142451

2/2

FIG 7

FIG 8

FIG 9

FIG 10

FIG 11